# FASCICULE DE BREVET EUROPEEN

(11) **EP 1 679 957 B1**
(45) Date de publication et mention de la délivrance du brevet: **13.06.2007**
(21) Numéro de dépôt: 04797224.5
(22) Date de dépôt: 04.11.2004
(51) Int. Cl.: A01K 13/00

(54) **SYSTEME DE CORRECTION DE POSTURE**
HALTUNGSKORREKTURSYSTEM
POSTURE CORRECTION SYSTEM

(30) Priorité: 05.11.2003 CH 190303
(43) Date de publication de la demande: 19.07.2006
(73) Titulaire: MERZ, François, 2000 Neuchâtel (CH)
(72) Inventeur: MERZ, François, 2000 Neuchâtel (CH)
(74) Mandataire: Grosfillier, Philippe
(86) Numéro de dépôt international: PCT/CH2004/000667
(87) Numéro de publication internationale: WO 2005/043989

(56) Documents cités:
- DE-A1- 3 230 158
- DE-A1- 3 715 015
- US-A- 4 974 398
- DATABASE WPI Section PQ, Week 199718 Derwent Publications Ltd., London, GB; Class P14, AN 1997-200473 XP002319461 "Pijpkous" -& NL 1 001 001 C (DEKENS L P) 18 février 1997 (1997-02-18)

## Description

La présente invention concerne les systèmes de correction de posture destinés principalement, mais pas nécessairement, aux chevaux.

Des guêtres lestées permettant de corriger la posture d'un cheval sont décrites dans les documents US-A- 4974398 et DE-A-3230158.

L'invention se présente sous la forme d'une guêtre

suivant la partie caractérisante des revendications 1 et 4, et sous la forme de l'utilisation d'une guêtre Lestée suivant les revendications 8 et 9. Des modes particuliers de réalisation de l'invention sont énoncés dans les revendications dépendantes.

Le lest exerce une force (de gravitation le plus souvent) qui agit sur la patte du cheval.

La masse, l'orientation et la position du lest peuvent être modifiées selon les besoins.

Pour une posture antérieure, la guêtre se place en-dessus du genou. Pour une posture postérieure, la guêtre se place en-dessous du jarret.

Le lest est disposé de préférence en porte-à-faux sur la guêtre, ce qui permet d'obtenir un moment de plus grande amplitude et de la sorte d'exercer une traction plus importante sur la patte.

La guêtre selon l'invention - en général, chaque patte du cheval est pourvue d'une telle guêtre - a pour but d'apporter un équilibre que le cheval a perdu au cours de son évolution en perdant ses "doigts" dont il reste aujourd'hui ce que l'on nomme les châtaignes. Le cheval moderne a gagné en vitesse mais perdu en équilibre. La présente invention offre la possibilité de compenser ce déséquilibre. Le cheval peut retrouver un balancier que l'évolution lui a retiré.

Par les différents avantages résultant de l'invention, on peut relever une diminution des inflammations, une mise en place de la posture et une musculation facilitée.

Le travail avec la guêtre selon l'invention peut être fait à la longe avec un mors en fixant la longe à l'extérieur du sens de longe, sans autre artifice.

Le cheval pourra être "travaillé" et monté avec les guêtres quand il aura acquis une musculature et une position correcte à la longe.

L'invention sera décrite de manière plus détaillée ci-après au moyen d'exemples.

Les figures 1 à 5 illustrent quelques exemples non limitatifs de guêtres selon l'invention.

La figure 6 présente de manière schématique une orientation avantageuse des lests sur un cheval.

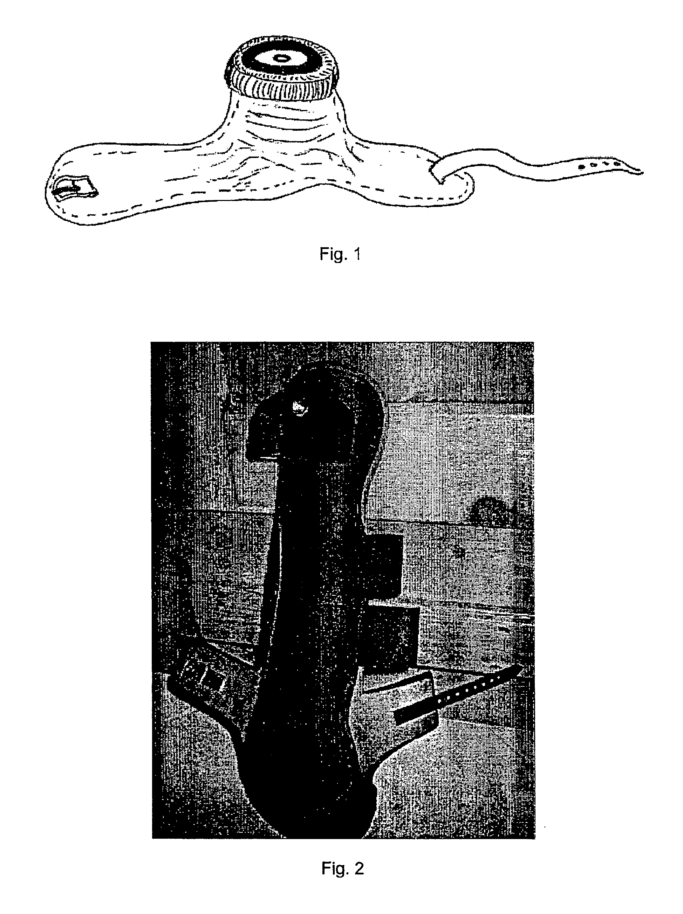

La guêtre illustrée sur la figure 1 peut être avantageusement utilisée pour une patte antérieure. Elle est constituée de la guêtre proprement dite qui comprend un système de fixation et d'un lest en forme de protubérance disposé au centre de la guêtre.

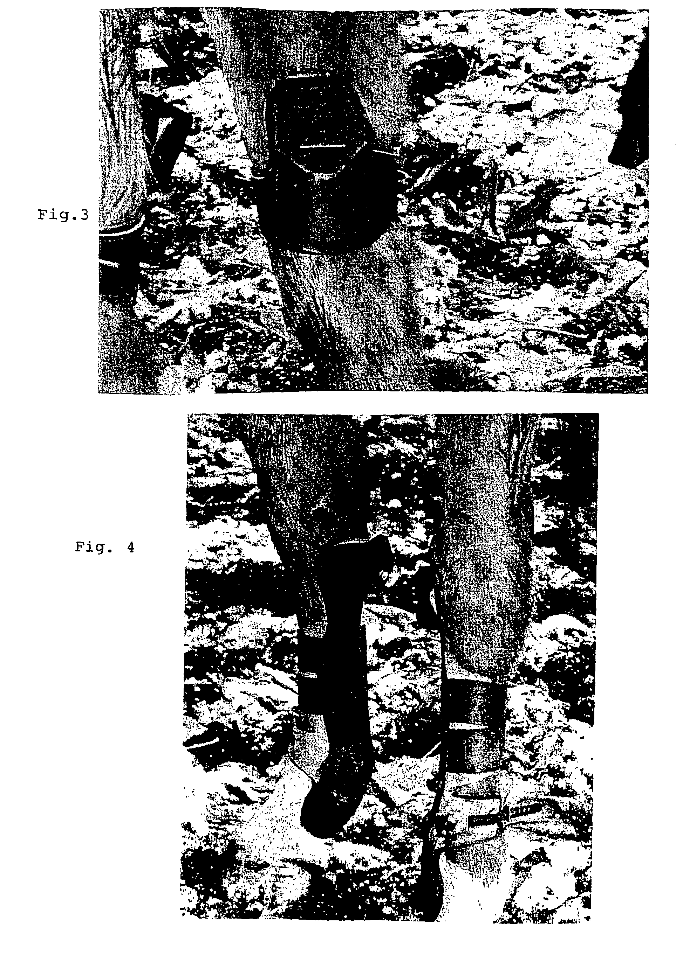

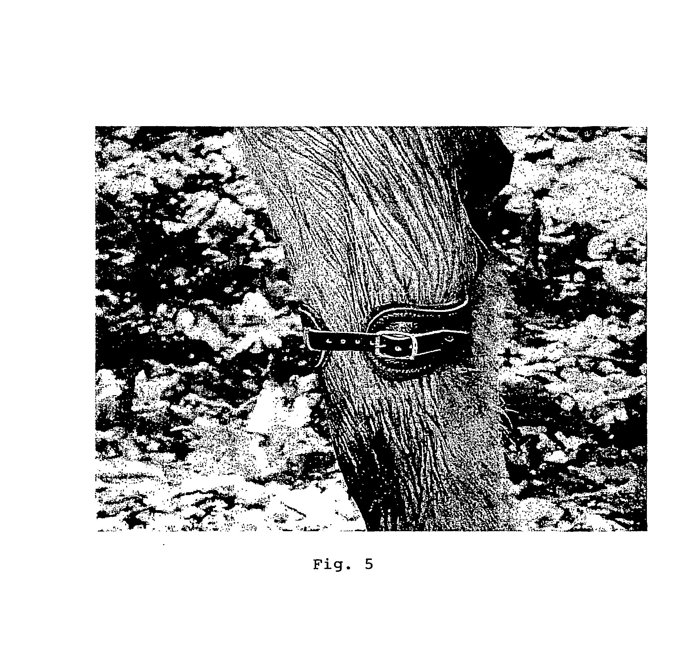

Les figures 3 et 5 illustrent des guêtres similaires à celle de la figure 1 qui sont fixées sur des pattes antérieures.

La guêtre illustrée sur la figure 2 peut être avantageusement utilisée pour une patte postérieure. Le lest est disposé dans la partie supérieure de la guêtre.

La figure 4 montrent des pattes postérieures munies des guêtres de la figure 2.

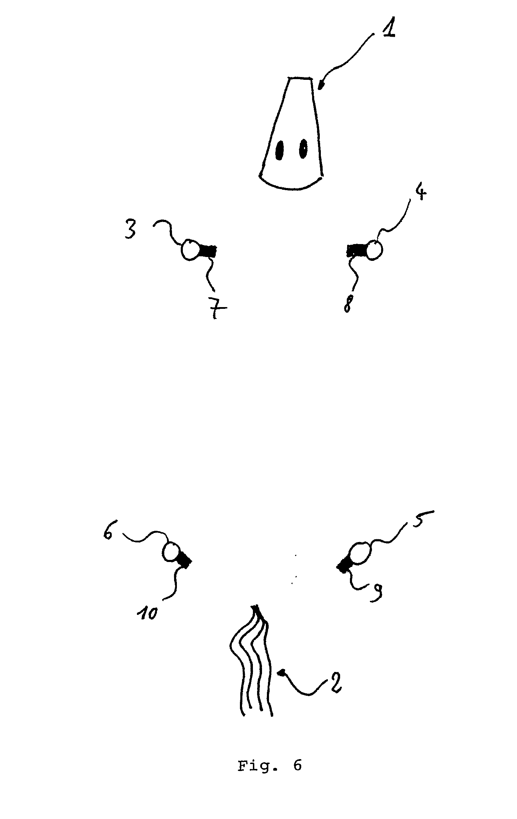

Le schéma de la figure 6 présente une possibilité d'arrangement des guêtres.

Elle représente la tête du cheval 1, la queue 2, la patte antérieure gauche 3 et son lest 7, la patte antérieure droite 4 et son lest 8, la patte postérieure droite 5 et son lest 9, la patte postérieure gauche 6 et son lest 10.

Les lests des guêtres antérieures 7,8 se dirigent vers l'intérieur et sont disposés l'un en face de l'autre.

Les lests des guêtres postérieures 9,10 se dirigent également vers l'intérieur mais pointent vers l'arrière, soit à environ 4 heures pour la patte postérieure gauche 6 et à environ 8 heures pour la patte postérieure droite 5.

Il va de soi que la disposition et l'orientation des lests peut être modifiée selon les besoins.

Pour une même guêtre, il est d'ailleurs possible de prévoir plusieurs lests.

On relèvera enfin que l'invention ne se limite pas à une forme ou un type de matériau choisi pour le lest. N'importe quelle forme ou matériau permettant de réaliser une fonction de lest peut être choisie.

## Revendications

1. Guêtre de posture antérieure pour cheval comprenant un lest, **caractérisée par le fait que** la guêtre est réalisée de manière à être placée en-dessus du genou.

2. Guêtre selon la revendication 1 **caractérisée en ce que** le lest est disposé sur la guêtre de manière à ce qu'il soit dirigé selon une orientation prédéfinie lorsque la guêtre est fixée sur le cheval.

3. Guêtre selon la revendication 2 **caractérisée par le fait que** le lest est disposé sur la guêtre de manière à être dirigé vers l'intérieur du cheval.

4. Guêtre de posture postérieure pour cheval comprenant un lest, **caractérisée par le fait que** la guêtre est réalisée de manière à ce que le lest est disposé dans la partie supérieure de la guêtre.

5. Guêtre selon la revendication 4 **caractérisée en ce qu'**elle est réalisée de manière à être fixée au-dessous du jarret.

6. Guêtre selon la revendication 4 ou 5 **caractérisée en ce que** le lest est disposé sur la guêtre de manière à ce qu'il soit dirigé selon une orientation prédéfinie lorsque la guêtre est fixée sur le cheval.

7. Guêtre selon la revendication 6 **caractérisée par le fait que** le lest est disposé sur la guêtre de manière à être dirigé vers l'intérieur du cheval.

8. Utilisation d'une guêtre lestée de posture antérieure pour cheval **caractérisée en ce que** l'on fixe la guêtre au-dessus du genou du cheval.

9. Utilisation d'une guêtre lestée de posture postérieure pour cheval **caractérisée en ce que** l'on fixe la guêtre.

10. Utilisation d'une guêtre lestée de posture postérieure selon la revendication 9 **caractérisée en ce que** l'on dispose le lest dans la partie supérieur de la guêtre.

## Claims

1. Fore posture gaiter for a horse, comprising a weight, **characterized in that** the gaiter is realized in such a way as to be placed above the knee.

2. Gaiter according to Claim 1, **characterized in that** the weight is disposed on the gaiter in such a way that it is directed according to a predefined orientation when the gaiter is fixed on the horse.

3. Gaiter according to Claim 2, **characterized in that** the weight is disposed on the gaiter in such a way as to be directed towards the inside of the horse.

4. Hind posture gaiter for a horse, comprising a weight, **characterized in that** the gaiter is realized in such a way that the weight is disposed in the upper part of the gaiter.

5. Gaiter according to Claim 4, **characterized in that** it is realized in such a way as to be fixed below the hock.

6. Gaiter according to Claim 4 or 5, **characterized in that** the weight is disposed on the gaiter in such a way that it is directed according to a predefined orientation when the gaiter is fixed on the horse.

7. Gaiter according to Claim 6, **characterized in that** the weight is disposed on the gaiter in such a way as to be directed towards the inside of the horse.

8. Use of a weighted fore posture gaiter for a horse, **characterized in that** the gaiter is fixed above the knee of the horse.

9. Use of a weighted hind posture gaiter for a horse, **characterized in that** the gaiter is fixed below the hock.

10. Use of a weighted hind posture gaiter according to Claim 9, **characterized in that** the weight is disposed in the upper part of the gaiter.

## Patentansprüche

1. Vordere Haltungsgamasche für ein Pferd, die einen Ballast aufweist, **dadurch gekennzeichnet, dass** die Gamasche hergestellt wird, um über dem Knie angeordnet zu werden.

2. Gamasche nach Anspruch 1, **dadurch gekennzeichnet, dass** der Ballast so auf der Gamasche angeordnet wird, dass er gemäß einer vordefinierten Richtung ausgerichtet ist, wenn die Gamasche am Pferd befestigt wird.

3. Gamasche nach Anspruch 2, **dadurch gekennzeichnet, dass** der Ballast so auf der Gamasche angeordnet ist, dass er zur Innenseite des Pferds gerichtet ist.

4. Hintere Haltungsgamasche für ein Pferd, die einen Ballast aufweist, **dadurch gekennzeichnet, dass** die Gamasche so hergestellt wird, dass der Ballast im oberen Bereich der Gamasche angeordnet ist.

5. Gamasche nach Anspruch 4, **dadurch gekennzeichnet, dass** sie hergestellt wird, um unter dem Sprunggelenk befestigt zu werden.

6. Gamasche nach Anspruch 4 oder 5, **dadurch gekennzeichnet, dass** der Ballast so auf der Gamasche angeordnet wird, dass er gemäß einer vordefinierten Richtung ausgerichtet ist, wenn die Gamasche am Pferd befestigt wird.

7. Gamasche nach Anspruch 6, **dadurch gekennzeichnet, dass** der Ballast so auf der Gamasche angeordnet wird, dass er zur Innenseite des Pferds gerichtet ist.

8. Verwendung einer mit Gewicht beschwerten vorderen Haltungsgamasche für ein Pferd, **dadurch gekennzeichnet, dass** die Gamasche über dem Knie des Pferds befestigt wird.

9. Verwendung einer mit Gewicht beschwerten hinteren Haltungsgamasche für ein Pferd, **dadurch gekennzeichnet, dass** die Gamasche unter dem Sprunggelenk befestigt wird.

10. Verwendung einer mit Gewicht beschwerten hinteren Haltungsgamasche nach Anspruch 9, **dadurch gekennzeichnet, dass** der Ballast im oberen Bereich der Gamasche angeordnet wird.
